# EUROPEAN PATENT SPECIFICATION

(11) **EP 2 820 996 B1**
(45) Date of publication and mention of the grant of the patent: **27.07.2016**
(21) Application number: 14173408.7
(22) Date of filing: 23.06.2014
(51) Int. Cl.: A47L 15/42, D06F 39/08, F16K 11/24

(54) **Valve device for an acquastop system to be used in a household appliance such as a dishwasher or a laundry washing machine**
Ventilvorrichtung für ein Aquastoppsystem zur Verwendung in einem Hausgerät wie Spülmaschine oder Waschmaschine für Wäsche
Dispositif de soupage pour un système aquastop utilisé dans un appareil ménager tel que lave-vaiselle ou machine à laver

(30) Priority: 01.07.2013 IT TO20130545
(43) Date of publication of application: 07.01.2015
(73) Proprietor: ELBI International S.p.A., 10129 Torino (IT)
(72) Inventor: Da Pont, Paolo, 10129 Torino (IT); Ravedati, Paolo, 10129 Torino (IT); Rendesi, Maurizio, 10129 Torino (IT)
(74) Representative: Vitillo, Giuseppe

(56) References cited:
- EP-A1- 2 282 094
- EP-A2- 1 400 622
- WO-A1-2010/140096
- US-A- 5 605 173

## Description

### Technical field

The present invention relates to a valve device for an acquastop system to be used in a household appliance, such as a dishwasher or a laundry washing machine.

### Technological background

In this technological field acquastop systems are used to control the supply of water to a household appliance, for example a washing machine, such as a dishwasher or a laundry washing machine.

An acquastop system fulfills the function of adjusting the inflow of water from a water intake, typically the hydraulic distribution network, to the washing machine associated therewith, in particular in case there is water leaking through the pipes originating from the water intake and reaching the washing machine.

More specifically, the present invention relates to a valve device for an acquastop system to be used in a household appliance, such as a dishwasher or a washing machine, wherein said device comprises:
-- a hollow body having
   an inlet portion, which is hydraulically connectable to a water intake to receive a water flow, and
   an outlet portion, which is hydraulically connectable, in particular by means of a supply tube of said acquastop system surrounded by a safety tube of said acquastop system, to said household appliance so as to deliver said water flow; and
- a valve apparatus, which is fixed to said hollow body, arranged between said inlet portion and said outlet portion, and suited to control the passage of said water flow through said hollow body.

Though, valve devices of the type described above suffer from some drawbacks.

One drawback consists in the fact that acquastop systems using a valve device of the type described above require the adoption of complex hydraulic connections as well as further solenoid valve structures, taking up a large space inside the household appliance, to divide the flow among the different hydraulic apparatuses available in the household appliance itself (e.g. the detergent drawer, the washing tank, etc.).

In the art are known some devices as described in their respective documents.

For example, WO 2010140096 A1 discloses a solenoid valve assembly which comprises first and second shut-off solenoid valves for controlling the supply of hot water and cold water, and which have a body with an inlet duct and at least one outlet port, and with at least one control winding that extends from the body orthogonally to the respective inlet duct and is provided with electrical connection terminals which are parallel with one another. These solenoid valves are arranged with their respective bodies interconnected in a side-by-side arrangement, with the inlet ducts parallel with one another and with their respective windings also parallel with one another. The assembly further comprises a connecting structure with an electrically insulating plate-like body carrying a plurality of electrical conductors coupled to an electrical connector portion integrally formed with the connecting structure. The terminals of the windings are connected to the conductors of the connecting structure.

EP 1400622 A2 discloses a solenoid valve holder connected integrally with a pipe connector for the solenoid valve. The connector is angled downward, relative to the vertical back wall of the appliance casing.

EP 2282094 A1 concerns a hose set and a kit of parts with the hose set. The hose set comprises a hose and at least one first connector, suitable to be coupled to a washing machine or a dishwasher with an electrically manipulatable valve, wherein the first connector comprises a partially pipe-like shaped single-piece element with an attachment portion, with the pipe-like shaped single-piece element partially surrounded by the hose, wherein the attachment portion is configured to be directly brought into contact with the valve, to allow a fluid communication therebetween.

According to US 5605173 A, water enters a common manifold at one or more individually line valved inlet ports, and is routed selectively by direct acting type solenoid operated valves to plural exit ports from the manifold. One exit port solenoid valve is normally open and the solenoid valves for each of the other exit ports are normally closed. For instance valve controls all three ports. The line valves are closed thus lowering the pressure within manifold, whenever any one or more of exit valves is to be actuated-i.e., closing the normally open or opening the normally closed valves which are low force directing acting. If desired, the normally open (N.O.) exit valve may have a small central hole in the moveable valve poppet for allowing a pilot flow for lowering of pressure, when this normally open valve is in the closed position and is to be allowed to open without requirement for a very strong return spring. The N.O. valve solenoid armature has a head portion received in a cavity in the poppet; and the head portion is operative for limited lost motion with respect to the poppet for opening the pilot passage which lowers the manifold pressure permitting the return spring to re-open the N.O. valve. The manifold may have an automatic pressure release device and there may be flow regulators and/or filters associated with the inlet valves.

### Summary of the invention

An object of the present invention is to provide a valve device for an acquastop system, which is able to solve this and other drawbacks of the prior art and which, at the same time, can be produced in a simple and economic fashion.

In particular, an object of the present invention is to provide a valve device that is able to reduce the space needed for the functional and structural connection of an acquastop system to a household appliance.

According to the present invention, these and other objects are reached by means of a device defined according to the appended independent claim.

The appended claims are an integral part of the technical teaches provided in the description below concerning the present invention.

### Brief description of the drawings

Further features and advantages of the present invention will be best understood upon perusal of the following detailed description, which is provided by way of example and is not limiting, with reference to the accompanying drawings, which specifically show what follows:
- figure 1 is a schematic view of an acquastop system including a valve device according to an explanatory embodiment of the present invention;
- figure 2 is a perspective view of the valve device shown in figure 1;
- figure 3 is an exploded perspective view of the valve device shown in figure 2;
- figure 4 is a perspective view showing a longitudinal central section of the device shown in figure 2;
- figures 5 and 6 show longitudinal sections of a component of the valve device shown in the previous figures, in which the paths that the fluid can follow inside the component are highlighted;
- figures 7 and 8 are perspective views of a valve device according to another embodiment of the present invention; and
- figures 9 and 10 are perspective views of a valve device according to a further embodiment of the present invention.

### Detailed description of the invention

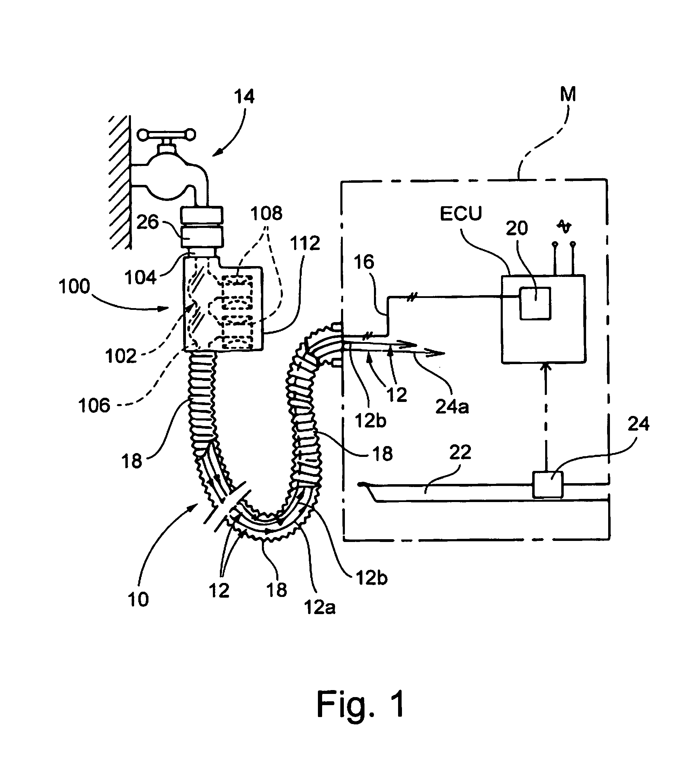

With reference to figure 1, number 10 indicates, as a whole, a so-called acquastop system to supply water to a household appliance, such as a washing machine M, in particular a laundry washing machine.

As a person skilled in the art can clearly understand, the acquastop system shown in the figures is suited to be also used in household appliances other than laundry machines, such as, for example, in dishwashers.

With reference to the embodiment shown in figure 1, system 10 comprises a water supply system, indicated as a whole with number 12, which is suited to be connected between a water intake 14 and machine M, so as to feed a water flow into said machine.

System 10 comprises, furthermore, an electrically controlled valve system, which is manufactured according to an explanatory embodiment of the present invention and in the drawings is indicated as a whole with number 100.

For the electric control of valve device 100, system 10 comprises insulated electric conductors 16, which are connected to valve device 100 in a known manner. In addition, acquastop system 10 comprises, furthermore, a safety tube 18, which extends around water supply tube 12, between valve device 100 and washing machine M. In particular, as one can see in figure 1, insulated electric conductors 16 extend, starting from valve device 100, in the hollow space arranged between water supply tube 12 and safety tube 18, until they reach the inside of machine M.

In the embodiment shown (see figure 1), washing machine M is provided with an electronic control unit ECU, to which electric conductors 16 for the connection of valve device 100 lead. Electronic control unit ECU comprises a control module 20, which is suited to control the operation of valve device 100 in the way that will be described in detail below.

Valve device 100 comprises:
- a hollow body 102 having
   an inlet portion 104, which is hydraulically connectable to water intake 14 to receive a water flow, and
   an outlet portion 106, which is hydraulically connectable, in particular by means of supply tube 12 surrounded by a safety tube 16 of acquastop system 10, to household appliance M so as to deliver said water flow; and
- a valve apparatus 108, which is fixed to hollow body 102, arranged between inlet portion 104 and said outlet portion 106, and suited to control the passage of the water flow through hollow body 102.

Outlet portion 106 has a plurality of outlets 106a, 106b for the water flow, each one of the outlets 106a, 106b being able to be hydraulically connected to a respective duct 12a, 12b of the supply tube 12. Furthermore, hollow body 102 defines a plurality of separate paths 110a, 110b for the water, each path 110a, 110b branching off inlet portion 104 and leading to a corresponding outlet 106a, 106b. In addition, valve apparatus 108 comprises a plurality of solenoid valves 108a, 108b, each solenoid valve 108a, 108b being suited to control the passage of water through a corresponding path 110a, 110b substantially independently of the other solenoid valves.

In this way, the flow of water flowing into machine M can be directly controlled by means of the sole vale device 100 associated with acquastop system 10, with no need to use further solenoid valves arranged on the inside of the dishwasher. Therefore, the space taken up inside the machine as a consequence of the use of an acquastop system is significantly reduced. Furthermore, with the use of valve device 100, the control circuits of acquastop system 10 are simplified compared to the traditional systems, thus increasing their abilities to be compatible with and applied to household appliances of different types and models.

More in detail, in an acquastop system provided with device 100 manufactured according to the present invention, in case there is a water leak (for example due to a crack in supply tube 12), the leaking water flows into machine M, through the hollow space defined between supply tube 12 and surrounding safety tube 14.

In the example shown in the figures, machine M comprises, on the inside, a container 22, which is adapted to collect the leaking water, and a level sensor 24, which is associated with the container and is connected to electronic control unit ECU. As soon as the level of leaking water in container 18 exceeds a predetermined level, unit ECU provokes the closing of valve device 100 and the consequent interception of the water flow. Therefore, the leak is stopped without risks of flooding.

As mentioned above, besides the effective anti-flooding function, which is typically fulfilled by acquastop systems, the device 100 is advantageously able to also fulfill the function of controlling the water flow delivery of a plurality of ducts 12a, 12b of the supply tube 12, which lead to different components of machine M or to different areas of the washing tank. Indeed, device 100 can be controlled by control unit ECU so as to be able to control the opening and closing state of solenoid valves 108a, 108b independently of one another. Therefore, the water flow flowing into hollow body 102 through inlet portion 104 and divided into the branching off of the plurality of paths 110a, 110b is selectively intercepted and freed, thus permitting and, respectively, forbidding its delivery through outlets 106a, 106b.

In the embodiment shown, paths 110a, 110b are separate from one another, for they do not mutually intersect, and are associated with solenoid valves 108a, 108b that do not cooperate with one another, thus establishing a structural and functional independence.

In the embodiment shown, inlet portion 104 is substantially cylindrical, in particular it has a circular section.

In the embodiment shown, the axis of inlet portion 104 defines longitudinal axis X-X of hollow body 102. Optionally, inlet portion 104 houses, on the inside, a flow rate measuring device, which is of a known type and is indicated, as a whole, with number 105.

Preferably, outlets 106a, 106b are openings of substantially cylindrical terminal ducts (in particular with a circular section) of hollow body 102 and have respective axes Za, Zb, which are parallel to one another and are transversely arranged at a distance.

In the embodiment shown, axes Za, Zb of outlets 106a, 106b are spaced apart on opposite sides, and especially by the same distance, of longitudinal axis X-X of hollow body 102.

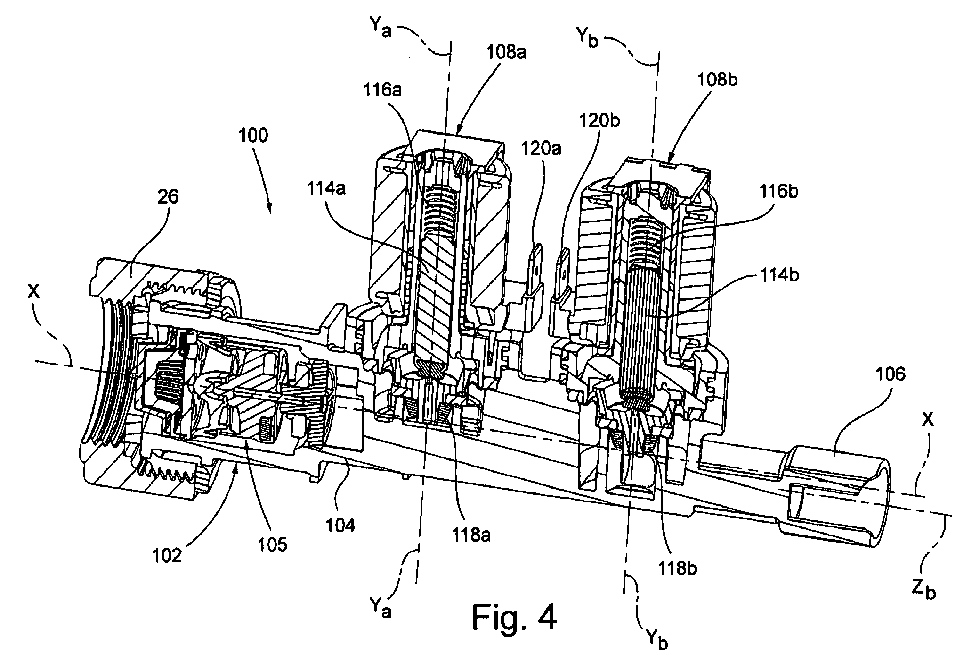

In particular, observing figure 4, axes Za, Zb of outlets 106a, 106b are arranged at a different height compared to the height of longitudinal axis X-X, in particular they are both arranged at a lower hight compared to longitudinal axis X-X.

In the embodiment shown, valve apparatus 108 is enclosed by a casing 112 - made of and electrically insulating material and shown only in figure 1.

In the embodiment shown, solenoid valves 108a, 108b are so-called pilot valves, which, for example, are known from the Italian patent application no. TO1994A001012 owned by the Applicant and published on June 13, 1996. Though, other types of direct solenoid valves can be used in device 100.

In particular, each solenoid valve 108a, 108b comprises an actuator 114a, 114b, for example a ferromagnetic core, which is actuated by a solenoid (not shown in the figures) and elastically pre-loaded, for example by a spring 116a, 116b. Furthermore, each solenoid valve 108a, 108b is provided with a shutter 118a, 118b, which cooperates with the respective ferromagnetic actuator 114a, 114b. In the embodiment shown, each solenoid valve 108a, 108b is suited to be connected to electric conductors 16 by means of a respective pair of terminals 120a, 120b.

Preferably, the overall shape of hollow body 102 is oblong and substantially tubular. In particular, hollow body 102 is made of a molded plastic material.

In the embodiment shown, hollow body 102 is manufactured as one single piece.

Preferably, inlet portion 104 is manufactured as a fitting, which, in particular, can be connected to water intake 14 by means of a ring nut connection 26.

In the embodiment shown, inlet portion 104 defines a common inflow tubular segment, from which all water paths 110a, 110b branch off.

Preferably, water paths 110a, 110b extend substantially parallel to one another through hollow body 102.

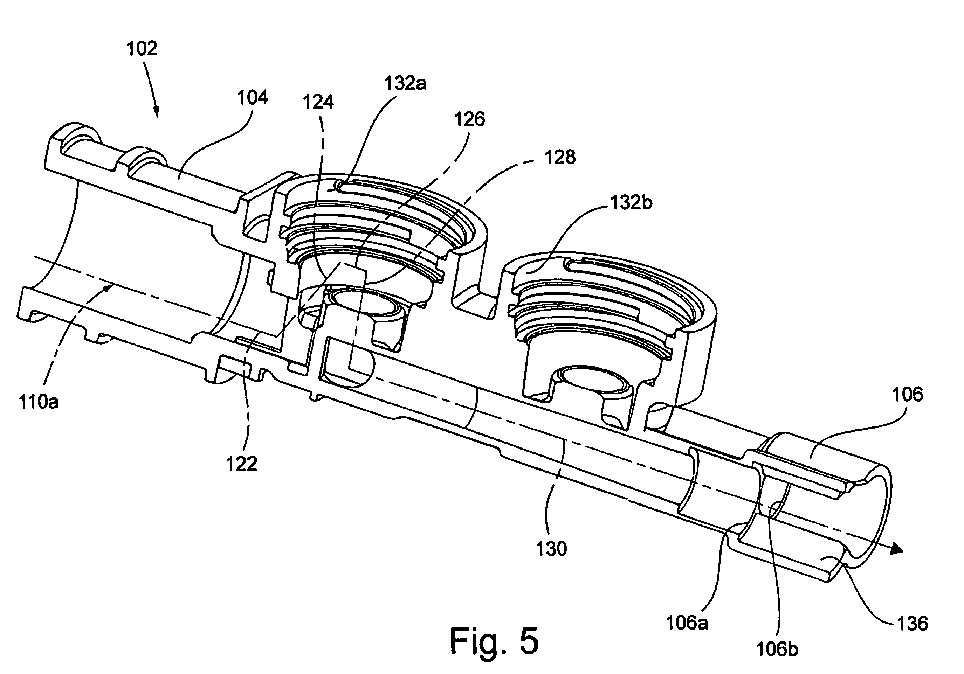

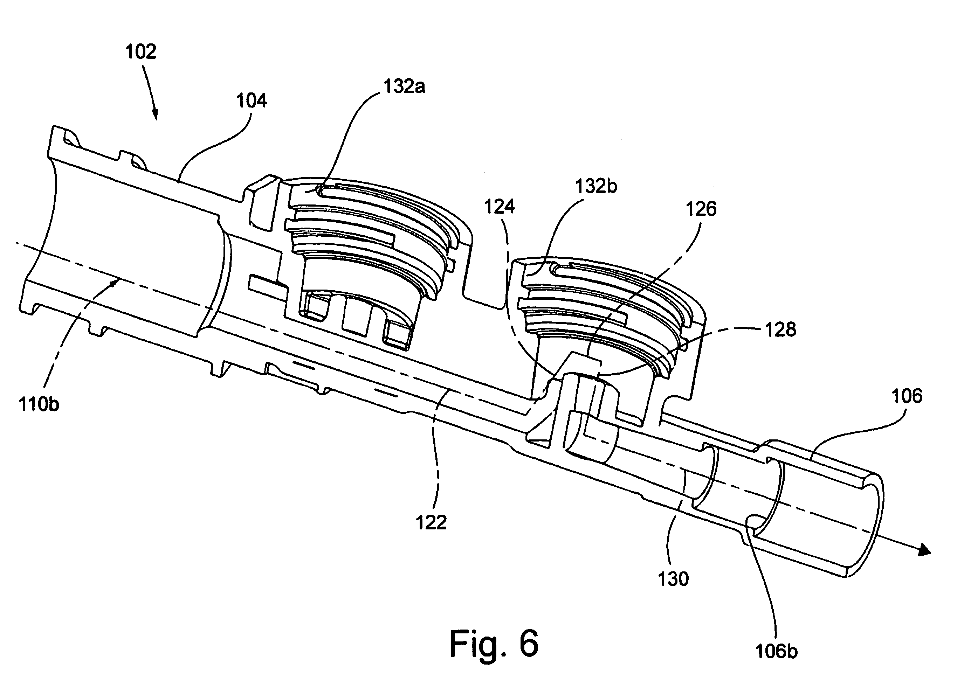

With reference in particular to figures 5 and 6, preferably, each one of water paths 110a, 110b is defined by a series of channel segments or ducts, which extend inside hollow body 102. In particular, the series of channel segments or ducts extend parallel to one another, thus minimizing the overall transverse dimensions of device 100.

In the embodiment shown, the channel segments of each series of channel segments have a substantially zigzag shape.

In the embodiment shown, observing figures 5 and 6, each series of channel segments or ducts comprises:
- an axial inlet segment 122, which branches off said inlet portion 104 and substantially extends parallel to longitudinal axis X-X of hollow body 102,
- a transverse segment 124, which transversely deflects from axial inlet segment 122,
- an annular chamber 126, to which said transverse segment 124 leads,
- a transverse interception passage 128, which is radially internal relative to said annular chamber 126 and is capable of being obstructed and freed by the respective shutter 118a, 118b, and
- an axial outlet segment 130, which axially deflects relative to transverse interception passage 128 and leads to the respective outlet 106a, 106b.

In the embodiment shown, axial inlet segment 122 and axial outlet segment 130 of each series of channel segments or ducts are substantially aligned (for example in correspondence to the respective axis Za, Zb) and transversely staggered (in particular on opposite sides) relative to longitudinal axis X-X of hollow body 102.

Preferably, each shutter 118a, 118b can be moved relative to the valve seat associated therewith, in particular identified by transverse passage 128, in a direction that is substantially transverse relative to the longitudinal axis X-X of hollow body 102.

In the embodiment shown, directions Ya-Ya, Yb-Yb, with which shutters 118a, 118b move and act upon the respective valve seat, are substantially parallel. Preferably, even the courses with which shutters 118a, 118b operate are concordant in the opening and closing of the respective valve seat.

In particular, the directions or operating axes Ya-Ya, Yb-Yb of shutters 118a, 118b intersect (optionally being perpendicular thereto) longitudinal axis X-X of hollow body 102, for example lying on the same longitudinal plane.

In the embodiment shown, the directions or operating axes Ya-Ya, Yb-Yb of shutters 118a, 118b substantially coincide with the moving axis of the respective ferromagnetic actuators 114a, 114b, which are engaged in an axial support relationship with shutters 118, 118b. In particular, the aforesaid axes or operating directions also coincide with the axis of the respective solenoids used to excite and control the movement of ferromagnetic actuators 114a, 114b.

In the embodiment shown, solenoid valves 108a, 108b are mounted on hollow body 102 through respective openings 132a, 132b, which are radially obtained on the hollow body itself. In particular, openings 132a, 132b are preferably made on the same side of hollow body 102, so as to reduce the overall transverse dimensions of device 100.

Preferably, openings 132a, 132b are manufactured as fittings that can be coupled to complementary portions carried by each solenoid valve 108a, 108b, thus forming, for example, a threaded coupling or a bayonet coupling. In particular, each solenoid valve 108a, 108b comprises a respective guide casing 134a, 134b, on which respective actuator 114a, 114b is mounted in a sliding manner and on which a portion is provided that is complementary to the one of associated opening 132a, 132b.

In the embodiment shown, outlet portion 106 has one single fitting end 136, for example substantially tubular, which is suited to be mechanically coupled, for example by interference, to a corresponding fitting assembly (not shown), which keeps supply tubes 12 of acquastop system 10 mechanically joined but hydraulically separated. In this way, the connection between valve device 100 and the rest of acquastop system 10 can be carried out in one single operation.

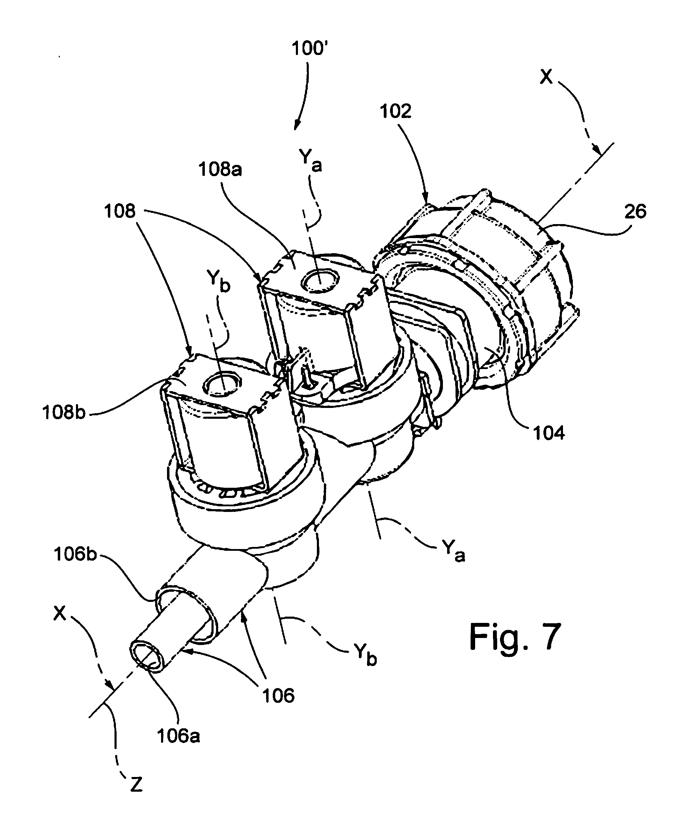

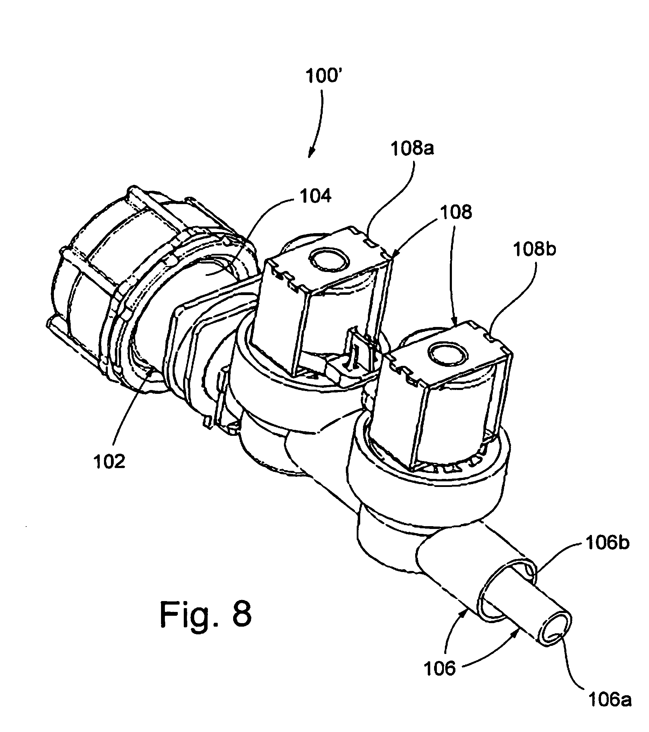

With reference to figures 7 and 8, number 100' indicates, as a whole, a valve device manufactured according to another embodiment of the present invention.

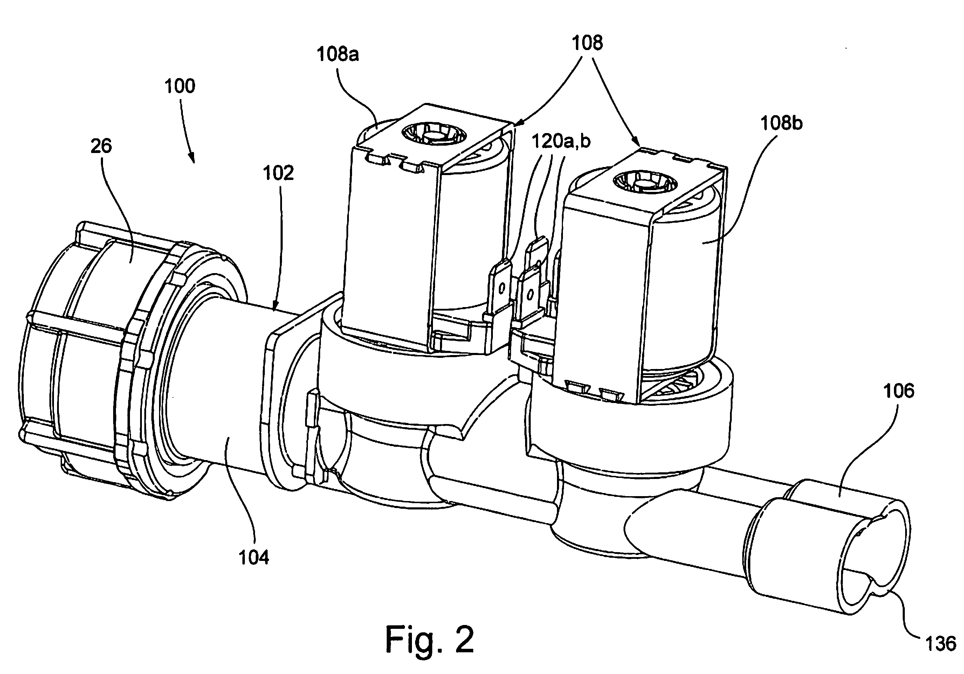

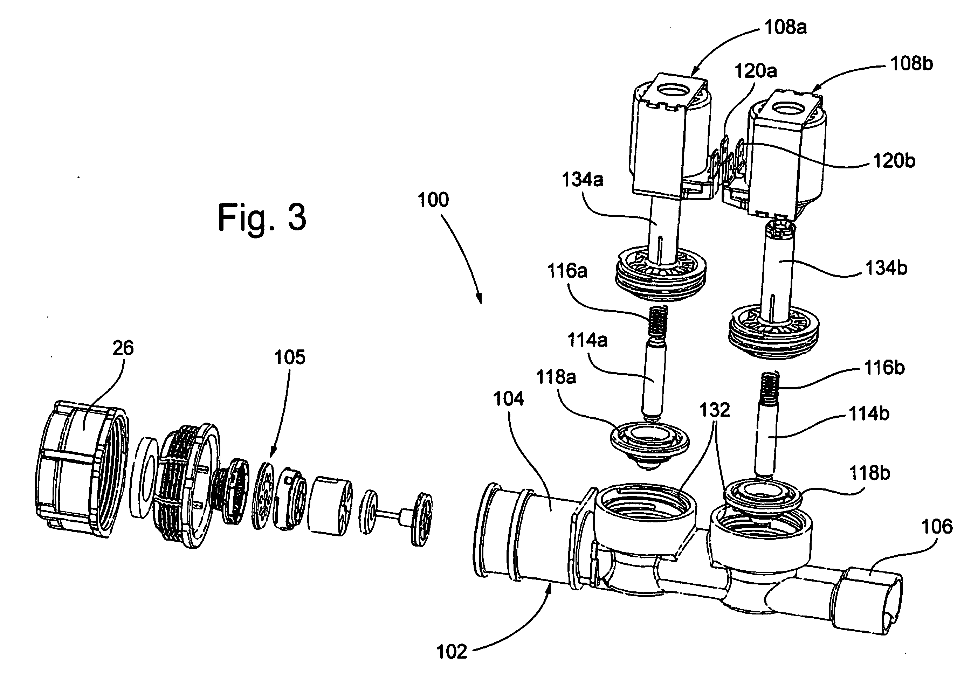

Features, elements and components that are similar to the ones of the embodiment shown in the figures from 1 to 6 are associated with the same reference numbers. Furthermore, for the sake of brevity, for these features, elements and components reference is made to what described above in relation to the embodiment shown in figures 1 to 6.

Unlike the embodiment described above, outlet portion 106 comprises a plurality of tubular cylindrical elements surrounding one another, each one of these cylindrical elements defining a respective outlet 106a, 106b.

In this embodiment, outlet portion 106 is manufactured as a pair of tubular cylindrical elements surrounding one another, in particular the cylindrical element defining first outlet 106a is surrounded by the cylindrical element defining second outlet 106b.

Therefore, in this embodiment, the water coming from second path 110b and flowing out of second outlet 106b touches the outer lateral walls of the cylindrical element defining first outlet 106a, anyway keeping first path 110a separate from second path 110b. Hence, second outlet 106b is a substantially annular opening that surrounds first outlet 106a.

Preferably, openings 106a, 106b define a single axis Z.

In particular, in the embodiment shown in the figures 7 and 8, longitudinal axis X-X of hollow body 102 substantially coincides with single axis Z defined by openings 106a, 106b, thus reducing the overall transverse dimensions of device 100'.

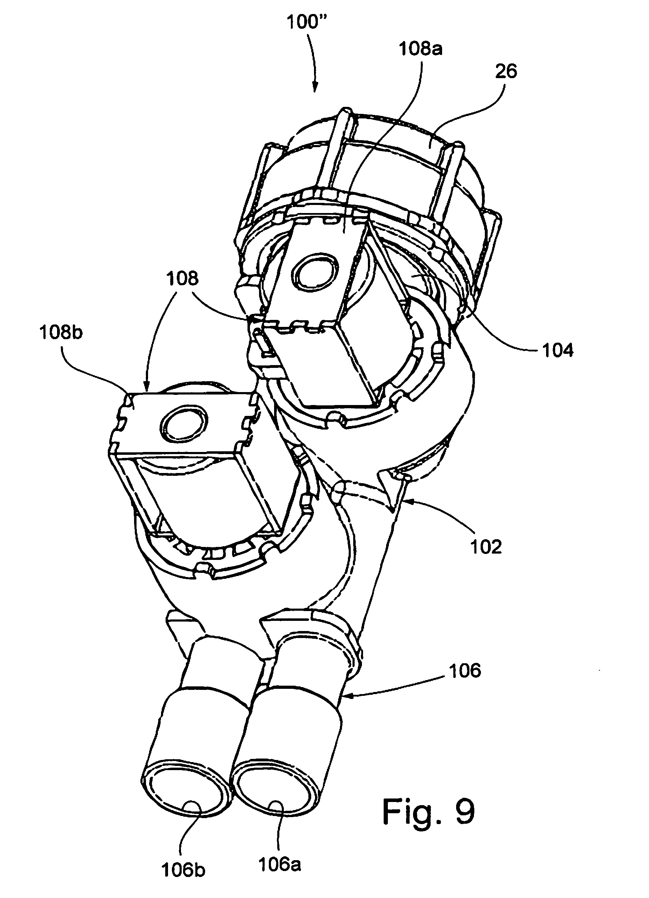

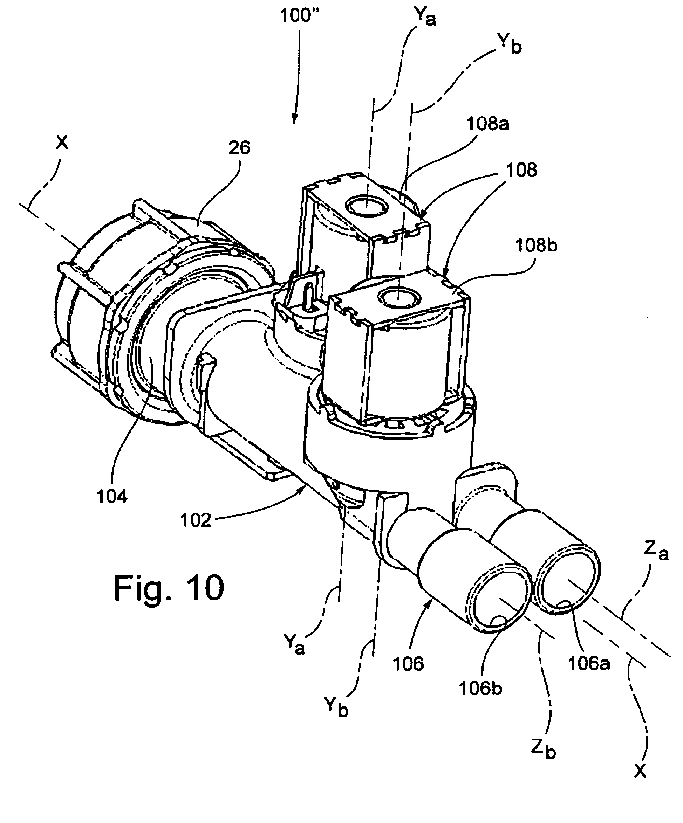

With reference to figures 9 and 10, number 100" indicates, as a whole, a valve device manufactured according to another embodiment of the present invention.

Features, elements and components that are similar to the ones of the embodiment shown in the figures from 1 to 6 are associated with the same reference numbers. Furthermore, for the sake of brevity, for these features, elements and components reference is made to what described above in relation to the embodiment shown in figures 1 to 6.

Unlike the embodiment discussed before and shown in the figures from 1 to 6, the directions or movement axes Ya, Yb of shutters 118a, 118b are transversely staggered relative to one another, in particular on opposite sides (and, for example, by the same distances) relative to longitudinal axis X-X of hollow body 102.

Unlike the embodiment discussed before and shown in the figures from 1 to 6, preferably, outlets 106a, 106b are not provided with fitting element 136, but they can be mechanically connected to the respective ducts of supply tube 12 with different means and modes.

Naturally, the principle of the present invention being set forth, the embodiments and the implementation details can be widely changed relative to the ones described above and shown in the drawings as a mere way of non-limiting example, without in this way going beyond the scope of protection provided by the accompanying claims.

As a person skilled in the art can clearly understand, the features, elements and components that distinguish the different embodiments described above and shown in the drawings can freely be exchanged among said embodiments, provided that they are compatible. For example, a skilled person can conceive a variant of the invention in which the outlet portion comprises a plurality of outlet groups and the groups are arranged on axes that are distinct from one another. According to this variant, each group comprises a plurality of tubular cylindrical elements surrounding one another and each cylindrical element defines a respective outlet. In other words, this variant is a combination between the plurality of outlets having distinct axes, shown in the embodiments of figures 1-6 and of figures 9-10, and the plurality of outlets having coinciding axes, shown in the embodiment of figures 7-8.

Furthermore, even though in all the embodiments shown the plurality of outlets (as well as the water paths and the solenoid valves associated therewith) consists of a pair of outlets, it is obvious to a person skilled in the art that this invention can also be applied when the outlets provided (as well as the water paths and the solenoid valves associated therewith) are more than two.

## Claims

1. Valve device (100, 100" 100") for an acquastop system (10) to be used in a household appliance (M), such as a dishwasher or a laundry machine; said device comprising:
- a hollow body (102) having
an inlet portion (104), which is hydraulically connectable to a water intake (14) to receive a water flow, and
an outlet portion (106), which is hydraulically connectable, in particular by means of a supply tube (12) of said acquastop system (10) surrounded by a safety tube (18) of said acquastop system (10), to said household appliance (M) so as to deliver said water flow; and
- a valve apparatus (108), which is fixed to said hollow body (102), arranged between said inlet portion (104) and said outlet portion (106), and arranged to control the passage of said water flow through said hollow body (102);
said outlet portion (106) has a plurality of outlets (106a, 106b) for a water flow, each one of said outlets (106a, 106b) being able to be connected to a respective duct (12a, 12b) of the supply tube (12);
said hollow body (102) defines a plurality of paths (110a, 110b) for the water, which are separate from one another, each path (110a, 110b) branching off said inlet portion (104) and leading to a corresponding outlet (16a, 16b); and
said valve apparatus (108) comprises a plurality of solenoid valves (108a, 108b), each solenoid valve (108a, 108b) being arranged to control the passage of water through a corresponding path (110a, 110b) substantially independently of the other solenoid valves (108a, 108b);
said device (100) being **characterized in that** at least one of said paths (110a, 110b) for the water is defined by a series of channel segments or ducts (122, 124, 126, 128, 130), which extend inside the hollow body (102), wherein said series comprises:
- an axial inlet segment (122), which branches off said inlet portion (104) and substantially extends parallel to the longitudinal axis (X-X) of said hollow body (110),
- a transverse segment (124), which transversely deflects from said axial inlet segment (122),
- an annular chamber (126), to which said transverse segment (124) leads,
- a transverse interception passage (128), which is radially internal relative to said annular chamber (128) and is capable of being obstructed and freed by the respective solenoid valve (108a, 108b), and
- an axial outlet segment (130), which axially deflects relative to said transverse interception passage (128) and leads to the respective outlet (106a, 106b).

2. Device according to any of the previous claims, wherein said paths (110a, 110b) for the water substantially extend parallel to one another through said hollow body (102).

3. Device according to any of the previous claims, wherein said outlets (106a, 106b) are openings of substantially cylindrical terminal ducts of said hollow body (102) and have respective axes that are distinct from one another, in particular parallel to one another and spaced apart from one another.

4. Device according to any of the previous claims, wherein said outlet portion (106) comprises a plurality of tubular cylindrical elements that surround one another, each one of said cylindrical elements defining a respective outlet (106a, 106b), in particular having the same axis (Z).

5. Device according to any of the previous claims, wherein the shutter (118a, 118b) of each solenoid valve (108a, 108b) is movable relative to the valve seat associated therewith in a direction that is substantially transverse to the longitudinal axis (X-X) of said hollow body (102).

6. Device according to claim 5, wherein the directions with which said shutters (118a, 118b) act on the respective valve seat are substantially parallel.

7. Device according to claim 6, wherein said directions substantially lie on the same plane together with the longitudinal axis of said hollow body (102).

8. Device according to claim 6, wherein said directions are transversely staggered relative to one another, in particular on opposite sides relative to the longitudinal axis of said hollow body (102).

9. Acquastop system (10) for a household appliance (M), comprising:
- a valve device (100, 100', 100") according to any of the previous claims;
- a supply tube (12) surrounded by a safety tube (18), for hydraulically connecting said outlet portion (106) to said household appliance (M); each one of the outlets (106a, 106b) of said outlet portion (106) being hydraulically connected to a respective duct (12a, 12b) of the supply tube (12).

10. Assembly comprising:
- an acquastop system (10) according to claim 9;
- a household appliance (M), such as a dishwasher or a laundry machine, including an electronic control unit (ECU) comprising a control module (20) suited to control the operation of said valve device (100); said supply tube (12) and said safety tube (18) being hydraulically connected to said household appliance (M);
- insulated electric conductors (16) which extend, starting from said valve device (100), in the hollow space arranged between said water supply tube (12) and said safety tube (18), until they reach said electronic control unit (ECU).

11. Assembly according to claim 10, wherein said acquastop system (10) is external to said household appliance (M).

12. Assembly according to claim 10 or 11, wherein said household appliance (M) comprises, on the inside, a container (22), which is adapted to collect the leaking water, and a level sensor (24), which is associated with said container (22) and is connected to said electronic control unit (ECU).

## Patentansprüche

1. Ventilvorrichtung (100, 100', 100") für ein Aquastopp-System (10) für die Verwendung in einem Haushaltsgerät (M) wie beispielsweise in einem Geschirrspüler oder in einer Waschmaschine; wobei die Vorrichtung umfasst:
- einen Hohlkörper (102) mit
einem Einlassabschnitt (104), welcher hydraulisch mit einem Wassereinlass (14) verbindbar ist, um einen Wasserzufluss zu empfangen, und
einem Auslassabschnitt (106), welcher hydraulisch insbesondere mittels eines Zuleitungsrohrs (12) des Aquastopp-Systems (10), das mit einem Sicherheitsrohr (18) des Aquastopp-System (10) umgeben ist, mit dem Haushaltsgerät (M) verbindbar ist, um so den Wasserzufluss zu liefern; und
- eine Ventilvorrichtung (108), welche am Hohlkörper (102) befestigt ist, der zwischen dem Einlassabschnitt (104) und dem Auslassabschnitt (106) angeordnet ist, und welche angeordnet ist, um den Durchgang des Wasserzuflusses durch den Hohlkörper (102) zu steuern;
wobei der Auslassabschnitt (106) eine Vielzahl von Auslässen (106a, 106b) für einen Wasserzufluss definiert, wobei jeder der Auslässe (106a, 106b) in der Lage ist, mit einer jeweiligen Leitung (12a, 12b) des Zuleitungsrohres (12) verbunden zu werden;
wobei der Hohlkörper (102) eine Vielzahl von Pfaden (110a, 110b) für das Wasser definiert, welche voneinander getrennt sind, wobei jeder Pfad (110a, 110b) vom Einlassabschnitt (104) abzweigt und zu einem entsprechenden Auslass (16a, 16b) führt; und
wobei die Ventilvorrichtung (108) eine Vielzahl von Magnetventilen (108a, 108b) umfasst, wobei jedes Magnetventil (108a, 108b) so angeordnet ist, um den Durchtritt von Wasser durch einen entsprechenden Pfad (110a, 110b) im Wesentlichen unabhängig von den anderen Magnetventilen (108a, 108b) zu steuern;
wobei die Vorrichtung (100) **dadurch gekennzeichnet ist, dass** wenigstens einer der Pfade (110a, 110b) für das Wasser durch eine Reihe von Kanalsegmenten oder Leistungen (122, 124, 126, 128, 130) definiert ist, die sich im Inneren des Hohlkörpers (102) erstrecken ist, wobei die Reihe umfasst:
- ein axiales Einlasssegment (122), welches vom Einlassabschnitt (104) abzweigt und sich im Wesentlichen parallel zur Längsachse (X-X) des Hohlkörpers (110) erstreckt,
- ein Quersegment (124), welches quer vom axialen Einlasssegment (122) umlenkt,
- eine ringförmige Kammer (126), zu welcher das Quersegment (124) führt,
- einen quer liegenden Abfangdurchgang (128), welcher sich radial innen relativ zur ringförmigen Kammer (128) befindet und durch das entsprechende Magnetventil (108a, 108b) gesperrt und freigegeben werden kann, und
- ein axiales Auslasssegment (130), welches axial relativ zum quer liegenden Abfangdurchgang (128) ablenkt und zu dem jeweiligen Auslass (106a, 106b) leitet.

2. Vorrichtung nach einem der vorhergehenden Ansprüche, wobei sich die Pfade (110a, 110b) für das Wasser im Wesentlichen parallel zueinander durch den Hohlkörper (102) erstrecken.

3. Vorrichtung nach einem der vorhergehenden Ansprüche, wobei die Auslässe (106a, 106b) Öffnungen von im Wesentlichen zylindrischen Endkanälen des Hohlkörpers (102) sind und entsprechende Achsen aufweisen, die voneinander verschieden, insbesondere parallel zueinander sind und zueinander beabstandet sind.

4. Vorrichtung nach einem der vorhergehenden Ansprüche, wobei der Auslassabschnitt (106) eine Vielzahl von rohrförmigen, zylindrischen Elementen umfasst, die einander umgeben, wobei jedes der zylindrischen Elemente einen jeweiligen Auslass (106a, 106b) insbesondere mit der gleichen Achse (Z) definiert.

5. Vorrichtung nach einem der vorhergehenden Ansprüche, wobei der Verschluss (118a, 118b) von jedem Magnetventil (108a, 108b) relativ zum Ventilsitz beweglich ist, welcher diesem in einer Richtung zugeordnet ist, die im Wesentlichen quer zur Längsachse (X-X) des Hohlkörpers (102) liegt.

6. Vorrichtung nach Anspruch 5, wobei die Richtungen, mit denen die Verschlüsse (118a, 118b) auf den jeweiligen Ventilsitz wirken, im Wesentlichen parallel sind.

7. Vorrichtung nach Anspruch 6, wobei die Richtungen im Wesentlichen auf der gleichen Ebene gemeinsam mit der Längsachse des Hohlkörpers (102) liegen.

8. Vorrichtung nach Anspruch 6, wobei die Richtungen quer relativ zueinander versetzt sind, insbesondere auf gegenüberliegenden Seiten relativ zur Längsachse des Hohlkörpers (102).

9. Aquastopp-System (10) für ein Haushaltsgerät (M), umfassend:
- eine Ventilvorrichtung (100, 100', 100") nach einem der vorhergehenden Ansprüche;
- ein Zuleitungsrohr (12), welches mit einem Sicherheitsrohr (18) umgeben ist, zum hydraulischen Verbinden des Auslassteils des Haushaltsgeräts (M); wobei jeder der Auslässe (106a, 106b) des Auslassabschnitts (106) hydraulisch mit einer entsprechenden Leitung (12a, 12b) des Zuleitungsrohres (12) verbunden ist.

10. Aufbau, umfassend:
- ein Aquastopp-System (10) nach Anspruch 9;
- ein Haushaltsgerät (M), beispielsweise ein Geschirrspüler oder eine Waschmaschine, mit einer elektronischen Steuereinheit (ECU), die ein Steuermodul (20) umfasst, welches geeignet ist, den Betrieb der Ventilvorrichtung (100) zu steuern; wobei das Zuleitungsrohr (12) und das Sicherheitsrohr (18) mit dem Haushaltsgerät (M) hydraulisch verbunden sind;
- isolierte elektrische Leiter (16), welche sich, ausgehend von der Ventileinrichtung (100), in den Hohlraum, der zwischen dem Wasserzuleitungsrohr (12) und dem Sicherheitsrohr (18) angeordnet ist, erstrecken, bis sie die elektronische Steuereinheit (ECU) erreichen.

11. Aufbau nach Anspruch 10, wobei das Aquastopp-System (10) extern zu dem Haushaltsgerät (M) vorgesehen ist.

12. Aufbau nach Anspruch 10 oder Anspruch 11, wobei das Haushaltsgerät (M) in seinem Inneren einen Behälter (22), welcher ausgelegt ist, das Leckwasser zu sammeln, und einen Pegelsensor (24) umfasst, welcher dem Behälter (22) beigefügt ist und mit der elektronischen Steuereinheit (ECU) verbunden ist.

## Revendications

1. Dispositif de vanne (100, 100',100") pour un système acquastop (10) à utiliser dans un appareil ménager (M) tel qu'un lave-vaisselle ou un lave-linge ; ledit dispositif comprenant :
- un corps creux (102) présentant
une partie d'entrée (104) qui peut être reliée hydrauliquement à une admission d'eau (14) pour recevoir un flux d'eau et
une partie de sortie (106) qui peut être reliée hydrauliquement audit appareil ménager (M) en particulier à l'aide d'un tube d'amenée (12) dudit système acquastop (10) entouré par un tube de sécurité (18) dudit système acquastop (10) de sorte à délivrer ledit flux d'eau ; et
- un appareil de vanne (108) qui est fixé audit corps creux (102) agencé entre ladite partie d'entrée (104) et ladite partie de sortie (106) et agencé pour contrôler le passage dudit flux d'eau par ledit corps creux (102) ;
ladite partie de sortie (106) possède une pluralité de sorties (106a, 106b) pour un flux d'eau, chacune desdites sorties (106a, 106b) étant apte à être reliée à un conduit respectif (12a, 12b) du tube d'amenée (12) ;
ledit corps creux (102) définit une pluralité de voies (110a, 110b) pour l'eau, qui sont séparées l'une de l'autre, chaque voie (110a, 110b) dérivant de ladite partie d'entrée (104) et menant à une sortie correspondante (16a, 16b) ; et
ledit appareil de vanne (108) comprend une pluralité d'électrovannes (108a, 108b), chaque électrovanne (108a, 108b) étant agencée pour commander le passage d'eau par une voie correspondante (110a, 110b) sensiblement indépendamment des autres électrovannes (108a, 108b);
ledit dispositif (100) étant **caractérisé en ce qu'**au moins une desdites voies (110a, 110b) pour l'eau est définie par une série de segments ou conduits de canal (122, 124, 126, 128, 130) qui s'étendent dans le corps creux (102), dans lequel ladite série comprend :
- un segment d'entrée axial (122) qui dérive de ladite partie d'entrée (104) et s'étend sensiblement parallèlement à l'axe longitudinal (X-X) dudit corps creux (110),
- un segment transversal (124) qui dévie transversalement dudit segment d'entrée axial (122),
- une chambre annulaire (126), à laquelle mène ledit segment transversal (124),
- un passage d'interception transversal (128) qui est radialement interne par rapport à ladite chambre annulaire (128) et est apte à être obstrué et libéré par l'électrovanne respective (108a, 108b) et
- un segment de sortie axial (130) qui dévie axialement par rapport audit passage d'interception transversal (128) et mène à la sortie respective (106a, 106b).

2. Dispositif selon l'une quelconque des revendications précédentes, dans lequel lesdites voies (110a, 110b) pour l'eau s'étendent sensiblement parallèlement l'une à l'autre au travers dudit corps creux (102).

3. Dispositif selon l'une quelconque des revendications précédentes, dans lequel lesdites sorties (106a, 106b) sont des ouvertures de conduits terminaux sensiblement cylindriques dudit corps creux (102) et ont des axes respectifs qui sont distincts l'un de l'autre, en particulier parallèles l'un à l'autre et espacés l'un de l'autre.

4. Dispositif selon l'une quelconque des revendications précédentes, dans lequel ladite partie de sortie (106) comprend une pluralité d'éléments cylindriques tubulaires qui s'entourent l'un l'autre, chacun desdits éléments cylindriques définissant une sortie respective (106a, 106b), en particulier présentant le même axe (Z).

5. Dispositif selon l'une quelconque des revendications précédentes, dans lequel l'obturateur (118a, 118b) de chaque électrovanne (108a, 108b) est mobile par rapport au siège de vanne associé avec celle-ci dans une direction qui est sensiblement transversale à l'axe longitudinal (X-X) dudit corps creux (102).

6. Dispositif selon la revendication 5, dans lequel les directions, avec lesquelles lesdits obturateurs (118a, 118b) agissent sur le siège de vanne respectif sont sensiblement parallèles.

7. Dispositif selon la revendication 6, dans lequel lesdites directions se trouvent sensiblement dans le même plan conjointement avec l'axe longitudinal dudit corps creux (102).

8. Dispositif selon la revendication 6, dans lequel lesdites directions sont transversalement échelonnées l'une par rapport à l'autre en particulier sur des côtés en regard par rapport à l'axe longitudinal dudit corps creux (102).

9. Système acquastop (10) pour un appareil ménager (M), comprenant :
- un dispositif de vanne (100, 100', 100") selon l'une quelconque des revendications précédentes ;
- un tube d'amenée (12) entouré par un tube de sécurité (18), pour la liaison hydraulique de ladite partie de sortie (106) avec ledit appareil ménager (M) ; chacune des sorties (106a, 106b) de ladite partie de sortie (106) étant hydrauliquement reliée à un conduit respectif (12a, 12b) du tube d'amenée (12).

10. Ensemble comprenant :
- un système acquastop (10) selon la revendication 9 ;
- un appareil ménager (M) tel qu'un lave-vaisselle ou un lave-linge, incluant une unité de commande électronique (ECU) comprenant un module de commande (20) adapté pour commander le fonctionnement dudit dispositif de vanne (100) ; ledit tube d'amenée (12) et ledit tube de sécurité (18) étant hydrauliquement reliés audit appareil ménager (M) ;
- des conducteurs électriques isolés (16) qui s'étendent à partir dudit dispositif de vanne (100) dans l'espace creux agencé entre ledit tube d'amenée d'eau (12) et ledit tube de sécurité (18) jusqu'à ce qu'ils atteignent ladite unité de commande électronique (ECU).

11. Ensemble selon la revendication 10, dans lequel ledit système acquastop (10) est externe audit appareil ménager (M).

12. Ensemble selon la revendication 10 ou 11, dans lequel ledit appareil ménager (M) comprend sur le côté intérieur un contenant (22) qui est adapté pour collecter l'eau de fuite et un capteur de niveau (24) qui est associé audit contenant (22) et est relié à ladite unité de commande électronique (ECU).
